# EUROPEAN PATENT SPECIFICATION

(11) **EP 3 980 431 B1**
(45) Date of publication and mention of the grant of the patent: **10.05.2023**
(21) Application number: 20746477.7
(22) Date of filing: 02.06.2020
(51) Int. Cl.: C07F 5/02, C08L 83/04, C08L 83/06

(54) **THERMALLY INITIATED ACID CATALYZED REACTION BETWEEN SILYL HYDRIDE AND EPOXIDES**
THERMISCH INITIIERTE SÄUREKATALYSIERTE REAKTION ZWISCHEN SILYLHYDRID UND EPOXIDEN
RÉACTION CATALYSÉE PAR UN ACIDE INITIÉE THERMIQUEMENT ENTRE UN HYDRURE DE SILYLE ET DES ÉPOXYDES

(30) Priority: 04.06.2019 US 201962856778 P
(43) Date of publication of application: 13.04.2022
(73) Proprietor: Dow Silicones Corporation, Midland, MI 48686-0994 (US)
(72) Inventor: WEI, Yanhu, Midland, MI 48686-0994 (US); SWIER, Steven, Midland, MI 48686-0994 (US); NIU, Zhenbin, Midland, MI 48686-0994 (US); LIU, Nanguo, Midland, MI 48686-0994 (US)
(74) Representative: Murgitroyd & Company
(86) International application number: PCT/US2020/035644
(87) International publication number: WO 2020/247337

(56) References cited:
- CN-A- 104 877 310
- US-A1- 2019 031 932
- US-B1- 6 777 512

## Description

### BACKGROUND OF THE INVENTION

### Field of the Invention

The present invention relates to a composition comprising a silyl hydride, epoxide, Lewis acid catalyst and amine blocking agent for the Lewis acid catalyst. Heating the composition releases the Lewis acid catalyst from the amine blocking agent and allows it to catalyze a reaction between the silyl hydride and epoxide.

### Introduction

Strong Lewis acids are known catalysts for numerous reactions. For instance, the Piers-Rubinsztajn (PR) reaction between silyl hydride and silyl ether is a well-known reaction catalyzed by a strong Lewis acid, particularly tris(pentafluorophenyl) borane ("BCF"). Similar Lewis acid catalyzed reactions include rearrangement reactions between silyl hydride and polysiloxane as well as silyl hydride and silanols. See, for instance Chem. Eur. J. 2018, 24, 8458-8469.

Lewis acid catalyzed reactions, such as the PR reaction, tend to be rapid reactions even at 23 degrees Celsius (°C). The high reactivity of these reaction systems limits their applications. The reactions may be desirable in applications such as coatings and adhesives; however, the systems must be stored in a multiple-part system in order to preclude reaction prior to application. Even so, the reaction can occur so quickly once the components are combined that there is little time to apply the reactive system. It is desirably to identify a way to control the Lewis acid catalyzed reactions and, ideally, provide them as one-part systems comprising reactants and Lewis acid catalyst in a form that is shelf stable at 23 °C but that can be triggered to react when desired.

Ultraviolet (UV) light sensitive blocking agents have been combined with Lewis acids in order to form blocked Lewis acids that release Lewis acid upon exposure to UV light. Upon exposure to UV light the blocking agent dissociates from the Lewis acid leaving the Lewis acid free to catalyze a reaction. A challenge with systems comprising these blocked Lewis acids is that they need to be kept in the dark in order to maintain stability. Moreover, they need to be exposed to UV light in order to initiate reaction - and for thick compositions it can be difficult to obtain UV light penetration to initiate cure quickly throughout the composition.

Notably, amines have been looked at in combination with Lewis acids in PR reaction type systems. However, amines are reported to completely suppress the reaction. See, for instance, Chem. Comm. 2010, 46, 4988-4990 at 4988. It was later identified that most amines complex essentially irreversibly with the Lewis acid catalysts, yet triaryl amines were found to be an exception and do not compromise Lewis acids in catalyzing PR reactions. See, Chem. Eur. J. 2018, 24, 8458-8469 at 8461 and 8463.

US 2019/031932 A1 discloses the reaction between a hydride-functional polysiloxane and an epoxy-functional polysiloxane in the presence of a Lewis acid boron catalyst compound.

It is desirable to identify a way to prepare a one-part system for a Lewis-acid catalyzed reaction that is shelf stable at 23 °C even when exposed to UV light, but that can be triggered to react when desired.

### BRIEF SUMMARY OF THE INVENTION

The present invention provides a solution to the problem of identifying a way to prepare a one-part system for a Lewis-acid catalyzed reaction that is shelf stable at 23 °C even when exposed to UV light, but that can be triggered to react when desired. In particular, the present invention provides a solution to such a problem in a reaction between silyl hydride and epoxides. Yet more, the present invention provides such a solution that is triggered to react when heated so as to have a desirable 95 °C Cure Speed, that is a 95 °C Cure Speed of 10 minutes or less, preferably 5 minutes or less, yet even more preferably one minute or less and most preferably 30 seconds or less.

The present invention arises from discovering that Lewis acids catalyze a reaction between silyl hydrides and epoxides and that such a reaction can occur in seconds. Epoxide functionalities whose carbons are part of a cyclic group have surprisingly been found to be especially reactive and react especially quickly with silyl hydrides in the presence of Lewis acid.

The present invention is a result of surprisingly and unexpectedly discovering specific amines that complex with a Lewis acid catalyst and block the activity of the Lewis acid catalyst at 23 °C but release the Lewis acid catalyst when heated. As a result, the specific amines are thermally triggerable blocking agents for the Lewis acid catalyst that block a Lewis acid catalyst at 23 °C yet release the Lewis acid catalyst to catalyze reactions at elevated temperatures such as 80 °C or higher, 95 °C or higher, or 100 °C or higher. This is surprising in view of previous understanding in the art. As noted above, current understanding is that amines either irreversibly complex with Lewis acid catalysts or, in the case of triarylamine, fail to compromise Lewis acid catalysts in Lewis acid catalyzed reactions. See, Chem. Comm. 2010, 46, 4988-4990 at 4988 and Chem. Eur. J. 2018, 24, 8458-8469 at 8461 and 8463.

The discovering of amines that work as thermally triggered blocking agents for Lewis acid catalysts enables the present inventive composition which serve as one-component reaction systems comprising a Lewis acid catalyst, silyl hydride and epoxides along with the amine blocking agent.

In a first aspect, the present invention is a composition comprising a mixture of silyl hydride, an epoxide, a Lewis acid catalyst and an amine having the following formula: R¹R²R³N, where the nitrogen (N) is not a member of an N=C-N linkage and where each of R¹, R², and R³ is independently selected from a group consisting of hydrogen, alkyl, substituted alkyl, and conjugated moieties, wherein: (a) when the epoxide carbons are part of a linear structure, then at least one of R¹, R² and R³ is a conjugated moiety connected to the nitrogen by a conjugated carbon; and (b) when the epoxide carbons are part of a cyclic structure, then each of R¹, R², and R³ is connected to the nitrogen by a non-conjugated carbon.

In a second aspect, the present invention is a process comprising the steps of: (a) providing a composition of the first aspect; and (b) heating the composition to a temperature sufficient to dissociate the Lewis acid catalyst from the amine.

Compositions of the present invention are suitable, for example, as one-component systems for coatings and adhesives.

### DETAILED DESCRIPTION OF THE INVENTION

Test methods refer to the most recent test method as of the priority date of this document when a date is not indicated with the test method number. References to test methods contain both a reference to the testing society and the test method number. The following test method abbreviations and identifiers apply herein: ASTM refers to ASTM International; EN refers to European Norm; DIN refers to Deutsches Institut für Normung; and ISO refers to International Organization for Standardization.

"Multiple" means two or more. "And/or" means "and, or as an alternative". All ranges include endpoints unless otherwise indicated. Products identified by their tradename refer to the compositions available from the suppliers under those tradenames at the priority date of this document unless otherwise stated herein.

The composition of the present invention comprises a mixture of silanol and/or silyl ether, silyl hydride, a Lewis acid and an amine. The composition is useful as a shelf stable, heat-triggered reactive mixture.

"Siloxane" refers to a molecule that contains at least one siloxane (Si-O-Si) linkage. "Polysiloxane" is a molecule that contains multiple Si-O-Si linkages. Polysiloxanes comprise siloxane units that are typically referred to as M, D, T or Q units. Standard M units have the formula (CH₃)₃SiO_{1/2}. Standard D units have the formula (CH₃)₂SiO_{2/2}. Standard T units have the formula (CH₃)SiO_{3/2}. Standard Q units have the formula SiO_{4/2}. M-type, D-type and T-type units can have one or more methyl group replaced with hydrogen, or some other moiety.

"Silyl hydrides" are molecules that contain a silicon-hydrogen (Si-H) bond and can contain multiple Si-H bonds.

"Epoxide" refers to a molecule containing an epoxide functionality. An "epoxide functionality" is a three membered ring consisting of two carbon atoms and an oxygen atom. "Epoxide carbons" are the two carbon atoms of an epoxide functionality.

"Alkyl" is a hydrocarbon radical derived from an alkane by removal of a hydrogen atom. "Substituted alkyl" is an alkyl that has an atom, or chemical moiety, other than carbon and hydrogen in place of at least one carbon or hydrogen.

"Aryl" is a radical derived from an aromatic hydrocarbon by removal of a hydrogen atom. "Substituted aryl" is an aryl that has an atom, or chemical moiety, other than carbon and hydrogen in place of at least one carbon or hydrogen.

"Conjugated" refers to a set of alternating carbon-carbon single and double and/or triple bonds whose p-orbitals are connected allowing for delocalized electrons across the carbon bonds. "Conjugated carbon" refers to a carbon in the set of alternating carbon-carbon single and double bonds that are conjugated. "Non-conjugated" refers to a carbon that is not part of a conjugated system. "Aromatic" refers to a cyclic planar conjugated molecule.

"Blocking agent" is a component that binds to a second component in order to prevent activity of the second component in some way. For example, a blocking agent on a catalyst precludes the catalyst from catalytic activity while complexed with the blocking agent.

Lewis acids catalyze a ring opening addition reaction between silyl hydrides and epoxides as generally shown below: 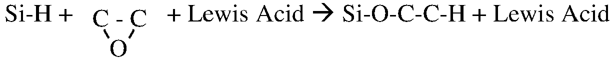 This reaction is useful to form new silyl ether bonds and to form crosslinked polysiloxane systems. A particularly desirable characteristic of this reaction over other Lewis acid catalyzed reactions such as Piers-Rubinsztajn (PR) reaction is that this reaction does not typically generate volatile side products that can create bubbles when the reaction is used to cure a siloxane polymer. Hence, the reaction is ideal for making clear cured compositions and films.

The present invention includes a composition comprising a mixture of silyl hydride, an epoxide, a Lewis acid catalyst and a particular amine. It has been discovered that the particular amines of the present invention act as blocking agents for the Lewis acid catalyst at 23 °C, but release the Lewis acid catalyst at elevated temperatures (for example, 95 °C). As a result, the compositions of the present invention are shelf stable at 23 °C but are thermally triggered to undergo Lewis acid catalyzed reaction at elevated temperatures. Such a composition achieves an objective of the present invention to provide a "shelf stable" on-part system for a Lewis acid catalyzed reaction. "Shelf stable" means that the reaction system does not gel at 23 °C in 6 hours or less, even more preferably in 12 hours or less and even more preferably in 24 hours or less and even more preferably in 2 days or less. Evaluate shelf stability using the "23 °C Shelf Life" test in the Examples section, below. The compositions of the present invention further provide a one-part system for a Lewis acid catalyze reaction that, while shelf stable at 23 °C, is triggered when desired by heating. In particular, compositions of the present invention gel at 95 °C in 30 minutes or less, preferably 15 minutes or less, more preferably in 10 minutes or less, even more preferably in 5 minutes or less and even more preferably in one minute or less, and most preferably 30 seconds or less. Determine rate of curing at 95°C using the "Cure Speed at 95 °C" test in the Example section, below.

### Epoxide

The epoxide can be any compound having one or more than one epoxide functionality. The epoxide can comprise silicon atoms in the form of, for instance, one or more than one siloxane (Si-O-Si) linkage. The epoxide can be a polysiloxane, having multiple siloxane linkages, with one or more than one epoxide functionality.

Polysiloxanes contain multiple siloxane linkages and can be characterized by the siloxy (SiO) groups that make up the polysiloxane. Siloxy groups are M-type, D-type, T-type or Q-type. M-type siloxy groups can be written as ≡SiO_{1/2} where there are three groups bound to the silicon atom in addition to an oxygen atom that is shared with another atom linked to the siloxy group. D-type siloxy groups can be written as =SiO_{2/2} where there are two groups bound to the silicon atom in addition to two oxygen atoms that are shared with other atoms linked to the siloxy group. T-type siloxy groups can be written as -SiO_{3/2} where one group is bound to the silicon atom in addition to three oxygen atoms that are shared with other atoms linked to the siloxy group. Q-type siloxy groups can be written as SiO_{4/2} where the silicon atom is bound to four oxygen atoms that are shared with other atoms linked to the siloxy group. The groups bound to the silicon atom are considered methyl groups unless otherwise specified. For instance, an "M" group is the same as trimethylsiloxy. An "M^{H}" group has two methyl groups and a hydrogen bound to a siloxane group. Epoxy functional polysiloxanes generally have an organic group containing an epoxy functionality bound to a silicon atom of the polysiloxane.

Examples of suitable polysiloxane epoxides for use in the present invention include any one or any combination or more than one of the following:
MDₐD^{CEP}_{b}M where subscript a is the average number of D siloxy units and is typically a value of 20 or more, 30 or more, 40 or more, 50 or more, 60 or more, 70 or more, 80 or more 90 or more 100 or more 110 or more and at the same time is generally 150 or less, 140 or less, 130 or less, 120 or less, and can be 110 or less, 100 or less, 90 or less, 80 or less and even 70 or less; subscript b is the average number of D^{CEP} siloxy units per molecule and is typically a value of one or more, 2 or more, 3 or more, 4 or more, 5 or more, 6 or more, 7 or more, 8 or more, 9 or more, or 10 or more and at the same time is typically 20 or less, 19 or less, 18 or less, 17 or less, 16 or less, 15 or less, 14 or less, 13 or less, 12 or less, 11 or less, 10 or less, 9 or less, or even 8 or less; and D^{CEP} is a D siloxy unit where one of the methyl groups is replaced with a pendant structure having a cyclic epoxide group, preferably a terminal cyclic epoxide group. For example, D^{HEP} is a D^{CEP} that is a D siloxy unit where one of the methyl groups is replaced with ethyl-cyclohexene oxide:

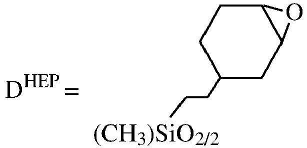

MDₐD^{EP}_{b'}M where subscript a is the average number of D siloxy units per molecule and is as defined above; subscript b' is the average number of D^{EP} siloxy units per molecule and is typically a value of one or more, 2 or more, 3 or more, 4 or more, 5 or more, 6 or more, 7 or more, 8 or more, 9 or more, or 10 or more and at the same time is typically 20 or less, 19 or less, 18 or less, 17 or less, 16 or less, 15 or less, 14 or less, 13 or less, 12 or less, 11 or less, 10 or less, 9 or less, or even 8 or less; and D^{EP} is a D siloxy unit where one of the methyl groups is replaced with a pendant structure having a linear epoxide group, preferably a terminal epoxide group. An example of a D^{EP} unit is shown below:

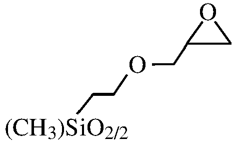

M^{CEP}D_{c}M^{CEP} where subscript c is the average number of D siloxy units per molecule and typically has a value of 5 or more, 10 or more, 15 or more, 20 or more, 25 or more, 30 or more, 35 or more, 40 or more, 45 or more, 50 or more, 55 or more, or 60 or more and at the same time typically has a value of 100 or less, 90 or less, 80 or less, 70 or less, 65 or less, or 60 or less; and M^{CEP} is an M siloxy unit where one of the methyl groups is replaced with a cyclic epoxide group, preferably terminal cyclic epoxide group. For example, M^{HEP} is an M siloxy unit where one of the methyl groups is replaced with ethyl-cylcohexene oxide:

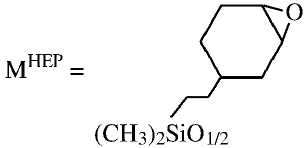

D^{EP}ₓD_{c}T₂ where subscripts x and c correspond to the average number of moles of the corresponding siloxy unit per molecule; subscript x typically has a value of 6 or more, 7 or more 8 or more 9 or more and even 10 or more while at the same time typically has a value of 20 or less, 19 or less, 18 or less, 17 or less, 16 or less, 15 or less, 14 or less, 13 or less, 12 or less, 11 or less, 10 or less, 9 or less or even 8 or less; subscript c typically has a value as defined for subscript c above for M^{HEP}D_{c}M^{HEP}; D^{EP} is as defined above and forms a cyclic ring with the T end groups.

The epoxide can be "linear epoxides", which means that they contain linear epoxide groups, or the epoxide can be a "cyclic epoxide" which means the epoxide contains cyclic epoxide groups. Conceivably, the epoxide can contain both linear and cyclic epoxide groups, in which case the epoxide is a "combination epoxide. Preferably, the epoxide is a linear epoxide (contains only linear epoxide groups) or a cyclic epoxide (contains only cyclic epoxide groups). Linear epoxide groups contain carbon atoms of the epoxide functionality that bond directly to one another to form the 3-membered cyclic epoxide functionality and are not connect directly or indirectly with one another in any other way. "Cyclic epoxide" groups contain carbon atoms of the epoxide functionality that are both bound directly to one another to form the 3-membered cyclic epoxide functionality and are also directly or, more typically, indirectly through other atoms bound to one another in a second bond or chain of bonds. For example, the cyclohexene oxide group of the D^{HEP} unit identified above is a "cyclic" epoxide because the two epoxide functionality carbons are bound directly to one another and also indirectly again through the four other carbons of the 6-membered ring. In contrast, the D^{EP} unit identified above contains a "linear' epoxide because the two epoxide functionality carbons are bound to one another only directly in the epoxide functionality.

Typically, the concentration of epoxide in the composition is 70 weight-percent (wt%) or more, 75 wt% or more, 80 wt% or more, 85 wt% or more, even 90 wt% or more while at the same time is typically 90 wt% or less, 85 wt% or less, 80 wt% or less, or even 75 wt% or less based on the combined weight of silyl hydride, epoxide, Lewis acid catalyst and amine in the composition.

### Silyl Hydride

The silyl hydride contains one, preferably more than one, Si-H bond. The Si-H bond is typically part of polysilane (molecule containing multiple Si-H bonds) or polysiloxane. Silyl hydrides containing multiple Si-H bonds are desirable as crosslinkers in compositions of the present invention because they are capable of reacting with multiple epoxide groups.

The silyl hydride of the present invention can be polymeric. The silyl hydride can be linear, branched or can contain a combination of linear and branched silyl hydrides. The silyl hydride can be a polysilane, a polysiloxane or a combination of polysilane and polysiloxanes.

Desirably, the silyl hydride is a polysiloxane molecule with one or more than one Si-H bond. If the silyl hydride is a polysiloxane, the Si-H bond is on the silicon atom of an M-type or D-type siloxane unit. The polysiloxane can be linear and comprise only M type and D type units. Alternatively, the polysiloxane can be branched and contain T (-SiO_{3/2}) type and/or Q (SiO_{4/2}) type units.

Examples of suitable silyl hydrides include pentamethyldisiloxane, bis(trimethylsiloxy)methyl-silane, tetramethyldisiloxane, tetramethycyclotetrasiloxane, D^{H} containing poly(dimethylsiloxanes) (for example, MD^{H}₆₅M), and hydride terminated poly(dimethylsiloxane) such as those available from Gelest under the tradenames: DMS-HM15, DMS-H03, DMS-H25, DMS-H31, and DMS-H41.

The concentration of silyl hydride is typically sufficient to provide a molar ratio of Si-H groups to epoxide groups that is 0.2 or more, 0.5 or more, 0.7 or more, 0.8 or more, 0.9 or more, 1.0 or more 1.2 or more, 1.4 or more, 1.6 or more, 1.8 or more, 2.0 or more, 2.2 or more, even 2.5 or more while at the same time is typically 5.0 or less, 4.5 or less, 4.0 or less, 3.5 or less, 3.0 or less, 2.8 or less, 2.5 or less, 2.3 or less, 2.0 or less, 1.8 or less, 1.6 or less, 1.4 or less, 1.2 or less or even 1.0 or less.

Either the epoxide or the silyl hydride (or both) can serve as crosslinkers in the reaction. A crosslinker has at least two reactive groups per molecule and reacts with two different molecules through those reactive groups to cross link those molecules together. Increasing the linear length between reactive groups in a crosslinker tends to increase the flexibility in the resulting crosslinked product. In contrast, shortening the linear length between reactive groups in a crosslinker tends to reduce the flexibility of a resulting crosslinked product. Generally, to achieve a more flexible crosslinked product a linear crosslinker is desired and the length between reactive sites is selected to achieve desired flexibility. To achieve a less flexible crosslinked product, shorter linear crosslinkers or even branched crosslinkers are desirable to reduce flexibility between crosslinked molecules.

The silyl hydride can be the same molecule as the epoxide - that is, a single molecule containing both epoxide and silyl hydride functionality can serve the roll as both the silyl hydride and epoxide. Alternatively, the silyl hydride can be a different molecule from the epoxide. The silyl hydride can be free of epoxide functionality. The epoxide can be free of silyl hydride groups.

The composition (and reaction process) of the present invention can comprise more than one silyl hydride, more than one epoxide and/or more than one component that serves as both a silyl hydride and siloxane.

Typically, the concentration of silyl hydride in the composition is 5 wt% or more, 10 wt% or more, 15 wt% or more, 20 wt% or more, even 25 wt% or more while at the same time is typically 30 wt% or less, 25 wt% or less, 20 wt% or less, 15 wt% or less or even 5 wt% or less based on the combined weight of silyl hydride, epoxide, Lewis acid catalyst and amine in the composition.

### Lewis Acid Catalyst

The Lewis acid catalyst is desirably selected from a group consisting of aluminum alkyls, aluminum aryls, aryl boranes, aryl boranes including triaryl borane (including substituted aryl and triaryl boranes such a tris(pentafluorophenyl)borane), boron halides, aluminum halides, gallium alkyls, gallium aryls, gallium halides, silylium cations and phosphonium cations. Examples of suitable aluminum alkyls include trimethylaluminum and triethylaluminum. Examples of suitable aluminum aryls include triphenyl aluminum and tris-pentafluorophenyl aluminum. Examples of triaryl boranes include those having the following formula: 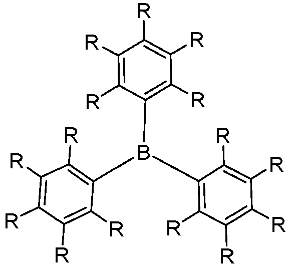 where R is independently in each occurrence selected from H, F, Cl and CF₃. Examples of suitable boron halides include (CH₃CH₂)₂BCl and boron trifluoride. Examples of suitable aluminum halides include aluminum trichloride. Examples of suitable gallium alkyls include trimethyl gallium. Examples of suitable gallium aryls include tetraphenyl gallium. Examples of suitable gallium halides include trichlorogallium. Examples of suitable silylium cations include (CH₃CH₂)₃Si⁺X⁻ and Ph₃Si⁺X⁻. Examples of suitable phosphonium cations include F-P(C₆F₅)₃⁺X⁻.

The Lewis acid is typically present in the composition at a concentration of 10 weight parts per million (ppm) or more, 50 ppm or more, 150 ppm or more, 200 ppm or more, 250 ppm or more, 300 ppm or more, 350 ppm or more 400 ppm or more, 450 ppm or more, 500 ppm or more, 550 ppm or more, 600 ppm or more, 70 ppm or more 750 ppm or more, 1000 ppm or more 1500 ppm or more, 2000 ppm or more, 4000 ppm or more, 5000 ppm or more, even 7500 ppm or more, while at the same time is typically 10,000 or less, 7500 ppm or less, 5000 ppm or less, 1500 pm or less, 1000 ppm or less, or 750 ppm or less relative to combined weight of epoxide and silyl hydride.

### Amine

The selection of amine is important because it must complex with the Lewis acid at 23 °C to inhibit catalytic activity of the Lewis acid in a reaction composition at that temperature, yet must release the Lewis acid at an elevated temperature so as to rapidly (within 10 minutes or less, preferably 5 minutes or less, more preferably one minute less) gel the reaction composition at 90 °C. Reaction compositions can be monitored at 23 °C and 90 °C to determine gel times (see Example section below). Alternatively, or additionally, one can characterize by differential scanning calorimetry the temperature at which the curing reaction exotherm occurs (Tpeak, see Example section below for procedure). The Tpeak value for a composition should increase relative to the Tpeak for an identical amine-free composition if the proper amine is present, but desirably remains below 130°C, preferably below 120°C, more preferably below 110 °C so as to reflect dissociation sufficient to rapidly cure at 90 °C.

Amines have been reported as irreversibly complexing with Lewis acid catalysts, except for triaryl amines which are reported to not compromise Lewis acid catalysts. Without being bound by theory, it seems the present invention is partly the result of discovering that by having one or more conjugated moiety attached the nitrogen of an amine through a conjugated carbon, the conjugated moiety helps delocalize the free electrons of the amine and weaken it as a Lewis base. As a result, amines having at least one conjugated moiety attached to the nitrogen of the amine through a conjugated carbon have been discovered to complex with and block Lewis acid catalyst at 23 °C so as preclude gelling of a reaction composition at 23 °C in 4 hours or less, preferably 8 hours or less, more preferably 10 hours or less, yet more preferably 12 hours less, while at the same time complexes weakly enough so as to release the Lewis acid catalyst upon heating to 90 °C so as to gel the composition in 10 minutes or less, preferably 5 minutes or less, more preferably one minute or less.

The present invention is a result of surprisingly discovering not only that amines can inhibit Lewis acid catalysts at 23 °C and yet release them when heated to catalyze reactions with epoxides, but that the necessary characteristics for the amine differ depending on whether the epoxide is a linear epoxide or a cyclic epoxide. However, in each case it has been discovered that the nitrogen of the amine must not be a member of an N=C-N linkage such as in amidines, guanidines and N-methylimidazole. Desirably, the composition is free of amines having an N=C-N linkage. For example, the composition can be free of amidines and guanidines.

***Amines for use with Linear Epoxides.*** Linear epoxides are less reactive than cyclic epoxides. Therefore, The amine for use when the epoxide is a linear epoxide has the following formula: R¹R²R³N, where the nitrogen (N) is not a member of a N=C-N linkage and where each of R¹, R², and R³ is independently selected from a group consisting of hydrogen, alkyl, substituted alkyl, and conjugated moieties, provided that at least one of R¹, R² and R³ is a conjugated moiety connected to the nitrogen by a conjugated carbon.

To be a sufficiently weak Lewis base for use with linear epoxides, the amines for use with linear epoxides have at least one, preferably at least two, and can have three conjugated moieties attached to the nitrogen of the amine through a conjugated carbon so that the free electron pair on the nitrogen can dissociate with the conjugated moiety and weaken the amine as a Lewis base. Preferably, the conjugated moieties are aromatic moieties.

Triaryl amines have three aromatic conjugated moieties attached to the amine nitrogen each through a conjugated carbon. As a result, triaryl amines are examples of amines that optimally delocalize the nitrogen free electrons to create a weak Lewis base. That is consistent with prior art reporting that triaryl amines do not compromise Lewis acid catalysts. Nonetheless, triaryl amines have been surprisingly discovered to have a blocking effect on Lewis acid catalysts at 23 °C and inhibit Lewis acid catalyzed reaction at 23 °C and are in scope of the broadest scope of the amines suitable for use in the present invention. Desirably, the amines of the present invention are stronger Lewis bases than triaryl amines in order to achieve greater blocking effect (hence, longer shelf stability) at 23 °C. In that regard, while the amine of the present invention can have one, two or three conjugated moieties attached to the nitrogen of the amine through a conjugated carbon, it is desirable that the amine is other than a triaryl amine. Compositions of the present invention can be free of triarylamines.

Examples of suitable amines for use with linear epoxides in compositions of the present invention include any one or any combination of more than one amine selected from a group consisting of: aniline, 4-methylaniline, 4-fluoroaniline, 2-chloro-4-fluoroaniline, diphenylamine, diphenylmethylamine, triphenylamine, 1-naphthylamine, 2-naphthylamine, 1-aminoanthracene, 2-aminoanthracene, 9-aminoanthracene, β-aminostyrene, 1,3,5-hexatrien-1-amine, N,N-dimethyl-1,3,5-hexatrien-1-amine, 3-amino-2-propenal and 4-amino-3-buten-2-one.

The ability of a conjugated moiety to weaken the strength of the amine as a Lewis base is further tunable with substituent groups that can be attached to the conjugated moiety. Including electron withdrawing groups (such as halogens) on the conjugated moiety will further draw the nitrogen electrons into the delocalized conjugated system and weaken the strength of the amine as a Lewis base. Including electron donating groups on the conjugated moiety has the opposite effect and increases the resulting amine strength as a Lewis base relative to the same amine with the conjugated moiety without the electron donating group(s). The amine needs to be strong enough to bind to and block the Lewis acid catalyst at 23 °C in order to achieve shelf stability. The amine will release the acid at lower temperatures if it is a weaker Lewis base than if it were a stronger Lewis base. Hence, selection of the moieties attached to the nitrogen of the amine can be selected to achieve shelf stability and reactivity at a desired temperature.

***Amines for use with Cyclic Epoxides.*** Cyclic epoxides are more reactive than linear epoxides. Therefore, the amine must be a stronger base to achieve shelf stable at 23 °C than the amine required for linear epoxides. The amine for use when the epoxide is a cyclic epoxide has the following formula: R¹R²R³N, where the nitrogen (N) is not a member of a N=C-N linkage and where each of R¹, R², and R³ is independently selected from a group consisting of hydrogen, alkyl, substituted alkyl, and conjugated moieties, provided that each of R¹, R², and R³ is connected to the nitrogen by a non-conjugated carbon. Examples of suitable amines for use with linear epoxides include trialkyl amines such as for example, any one or any combination of more than one selected from a group consisting of trimethylamine, triethyl amine, tripropyl amine, tributyl amine, tripentyl amine, trihexyl amine, triheptal amine, trioctyl amine and trinonylamine.

If the epoxide is a combination of linear epoxides and cyclic epoxides, or if the epoxide is combination epoxide, then the amine is desirably that suitable for cyclic epoxides. Preferably, the epoxide is either a linear epoxide or a cyclic epoxide.

The concentration of amine in the composition of the present invention is at least at a molar equivalent to the concentration of Lewis acid catalyst so as to be able to complex with and block all of the Lewis acid catalyst at 23 °C. The concentration of amine can exceed the molar concentration of Lewis acid catalyst, but preferably is present at a concentration of 110 mole-percent (mol%) or less, prefer 105 mol% or less, more preferably 103 mol% or less and most preferably 101 mol% or less while also being present at 100 mol% or more relative to total moles of Lewis acid catalyst.

The amine and Lewis acid form a complex in the composition that blocks the Lewis acid from catalyzing a reaction between the other composition components sufficiently to be shelf stable at 23 °C. Upon heating, the amine releases the Lewis acid to allow the Lewis acid to catalyze a reaction.

### Optional Components

Compositions of the present invention can consist of the silyl hydride, epoxide, Lewis acid catalyst and amine. Alternatively, the compositions of the present invention can further comprise one or a combination of more than one optional component. Optional components are desirably present at a concentration of 50 wt% or less, 40 wt% or less, 30 wt% or less, 20 wt% or less, 10 wt% or less, 5 wt% or less, or even one wt% or less based on composition weight.

Examples of possible optional components include one or a combination of more than one component selected from a group consisting of hydrocarbyl solvents (typically at a concentration of 10 wt% or less, 5 wt% or less, even one wt% or less based on composition weight), pigments such as carbon black or titanium dioxide, fillers such as metal oxides including SiO2 (typically at a concentration of 50 wt% or less based on composition weight), moisture scavengers, fluorescent brighteners, stabilizers (such as antioxidants and ultraviolet stabilizers), and corrosion inhibitors. The compositions of the present invention also can be free of any one or any combination of more than one such additional components.

Notably, the composition of the present invention can contain one wt% or less, 0.5 wt% or less water relative to composition weight. Desirably, the composition is free of water.

### Reaction Process

The present invention includes a chemical reaction process comprising the steps of: (a) providing a composition of the present invention; and (b) heating the composition to a temperature sufficient to dissociate the Lewis acid catalyst from the amine.

Step (a) can comprise mixing together an amine, Lewis acid catalyst, a silyl hydride and epoxide. However, the Lewis acid catalyst and amine are combined so that the amine can complex with and block the catalytic activity of the Lewis acid prior to combining them with both of silyl hydride and epoxide. It is possible to prepare the Lewis acid/amine complex in the presence of one of the reactants (that is, the silyl hydride or the epoxide) provided the Lewis acid does not catalyze reaction with the one reactant. The amine and Lewis acid can be combined in a solvent, such as toluene, to form the blocked Lewis acid complex and then that complex can be combined with the silyl hydride and siloxane.

Step (b) generally requires heating the composition to a temperature of 80 °C or higher, preferably 90 °C or higher while at the same time generally can be accomplished by heating to a temperature of 300 °C or lower, 250 °C or lower, 200 °C or lower, 150 °C or lower, and can be 100 °C or lower.

The compositions of the present invention are particular useful as coatings. The compositions can also be useful form forming molded articles. In such applications the process of the present invention can further comprise applying the composition to a substrate after step (a) and before or during step (b).

### Examples

### REACTANTS

***MD^{H}₆₅M Silyl Hydride.*** Fit a 3-necked flask with a mechanical stirrer and add 40 grams (g) deionized water, 10 g heptane and 0.05 g tosylic acid. Add to this dropwise while stirring a mixture of 200 g methyldichlorosilane and 10 g trimethylchlorosilane over 30 minutes. Stir for an additional 60 minutes at 23 °C. Wash the reaction solution three times with 50 milliliters (mL) deionized water each time. Dry the solution with anhydrous sodium sulfate and filter through activated carbon. Remove volatiles by Rotovap to obtain MD^{H}₆₅M Silyl Hydride.

**Synthesis of MD_{60.5}D^{H}_{7.5}M:** To a three-neck flask installed with mechanical stir add 60 gram deionized water, 15 gram heptane and 0.075 gram tosylic acid. Add a mixture of 270 gram dimethyldichlorosilane, 28 gram methyldichlorosilane and 15 gram trimethylchlorosilane dropwise into the reaction solution while stirring over 30 min. After one hour stirring at 23 °C, wash the reaction solution 3 times with 80 milliliters deionized water, dry with anhydrous sodium sulfate and filter through activated carbon layer. Remove volatiles by Rotovap to obtain the polymerization product MD_{60.5}D^{H}_{7.5}M.

**Synthesis of MD**_{**60**.}**₅D^{EP}_{7.5}M.** To a 500 mL 3N dry flask add 80 g (0.118 mol SiH) MD_{60.5}D^{H}_{7.6}M, 2 weight parts per million (ppm) Pt (Karstedt's catalyst) relative to weight of MD_{60.5}D^{H}_{7.6}M and 70 g toluene, followed by heating to 80°C. Add 20.2 g (0.177 mol) AGE (allylglycidyl ether) in 30 g toluene dropwise within 30 min at 80°C, and then heat the reaction mixture to reflux (at about 110°C) for 6 hours. Monitoring samples over time by ²⁹Si NMR reveals when reactants are gone and the reaction is complete. Once the reaction is complete, remove solvent and excess AGE by Rotovap to obtain 90 g the product MD_{60.5}D^{EP}_{7.5}M with 96% yield.

**Synthesis of MD_{60.5}D^{HEP}_{7.5}M:** To a 500 mL 3N dry flask add 110.7 g (0.163 mol SiH) MD_{60.5}D^{H}_{7.6}M, 2 ppm Pt (Karstedt's catalyst) relative to weight of MD_{60.5}D^{H}_{7.6}M, and 80 g toluene, followed by heating to 80°C. Add 30.4 g (0.245 mol) 4-Vinyl-cyclohexene oxide in 30 g toluene dropwise within 30 min at 80°C, and then heat he reaction mixture to reflux (at about 110°C) for 6 hours. Monitoring samples over time by ²⁹Si NMR reveals when reactants are gone and the reaction is complete. Once the reaction is complete, remove solvent and excess AGE by Rotovap to obtain 127 g the product MD_{60.5}D^{HEP}_{7.5}M with 90% yield.

**MD₁₁₇D^{HEP}_{11.8}M**. This material is commercially available as ECMS-924 from Gelest.

**Synthesis of M^{HEP}D₄₀M^{HEP}:** To a 500 mL 3N dry flask add 100 g (0.6464 mol) M^{H}D₄₀M^{H} (commercially available as DMS-HM15 from Gelest), 2 ppm Pt (Karstedt's catalyst) relative to weight of MD_{60.5}D^{H}_{7.6}M, and 80 mL toluene, followed by heating to 80°C. Add 12 g (0.0.097 mol) 4-vinyl-cyclohexene epoxide in 20 mL toluene dropwise within 25 min at 80°C, and then heat the reaction mixture to reflux (at about 110°C) for 6 hours. Monitoring samples over time by ²⁹Si NMR reveals when reactants are gone and the reaction is complete. Once the reaction is complete, remove solvent and excess AGE by Rotovap to obtain 103 g the product M^{HEP}D₄₀M^{HEP} with 95% yield.

### Catalyst Solution.

Prepare a catalyst solution by combining 5 wt% BCF in toluene with 5 wt% of specified amine (see below) in toluene at amounts sufficient to provide equi-molar amounts of BCF and amine (1:1 molar ratio) and approximately 12 grams of final solution. Sonicate the final solution for 30 seconds and let sit for 12 hours at 23 °C. Add 0.5-1.0 gram of tetrahydrofuran to the final solution to help dissolve the BCF-amine complex and form the catalyst solution for use in the example compositions.

### TEST METHODS

***23 °C Gel Time.*** Prepare compositions and place in vials, seal the vials and store at 23 °C. Invert the vials every minute for the first 10 minutes, then every 10 minutes for the first hour then every hour for the first 8 hours and then every 24 hours. Gel time at 23 °C is the time required for the composition to become sufficiently viscous so as to no longer flow within 1-2 of inverting the vial. Compositions are exposed to ambient light (including ultraviolet light) during 23 °C Gel Time testing.

***Hot Cure Time.*** Prepare compositions and coat as a 125 micrometer thick film on glassine paper. Place the films in an oven at the designated temperature and monitor at every 10 seconds for the first minute, then every minute for the first 10 minutes and then every 10 minutes from then on to determine when the film ceases to be tacky. The time required to cease being tacky is the Cure Time for the temperature at which it is being heated.

***Tpeak.*** Tpeak is the temperature where there is maximum reaction exotherm in a reaction system. Determine Tpeak by differential scanning calorimetry (DSC) for a sample composition. Characterize by DSC by loading a 10 milligram sample of a composition into a DSC pan and conducting DSC using a temperature ramp from 10 °C to 250 °C at a rate of 10 °C per minute. Tpeak is the temperature of maximum exotherm in the DSC curve.

### LINEAR EPOXIDE COMPOSITIONS

The following Comparative Examples (Comp Exs) and Examples (Exs) illustrate embodiments of the present invention with linear epoxides. Data for the samples is in Table 1.

### Comp Ex A: No Inhibitor

Prepare a composition by combining 10 grams MD_{60.5}D^{EP}_{7.5}M and 1.185 grams MD^{H}₆₅M Silyl Hydride with sufficient catalyst solution (5 wt% BCF in toluene) to provide 500 weight-parts BCF per million weight parts composition in a dental cup and mix using a speedmixer. The molar ratio of [SiH] to [epoxide group] is 1.5:1. Measure 23 °C Gel Time and 95 °C Cure Speed as per test methods above. The reactive composition is not shelf stable at 23 °C, gelling in 45 minutes.

### Comp Exs B-E: Aliphatic Amine Inhibitors and N=C-N Amine Inhibitors

Repeat Comp Ex A using a catalyst solution prepared as described above with an amine as specified in Table 1. Comp Exs B and C use trialkyl amines (trimethylamine (TEA) and tributyl amine (TBA) respectively). Comp Exs D and E use amines containing N=C-N linkages (1-methylimidazole (IMD) and 1,8-diazabicyclo[5.4.0]undec-7-ene (DBU) respectively).

Comp Exs B-E are Shelf Stable at 23 °C but fail to cure even within 2 hours at 95 °C, indicating that that the amine binds too strongly to the Lewis acid and therefor prevents the Lewis acid from catalyzing cure even when heated to 95 °C.

### Ex 1 and Ex 2: Amine Inhibitor with Conjugated Carbon

Repeat Comp Ex A using a catalyst solution prepared as described above with an amine as specified in Table 1 for Exs 1 and 2 and also with a molar ratio of amine to Lewis acid that is 2:1 instead of 1:1. Exs 1 and 2 use conjugated amines (triphenyl amine (TPA) and diphenylmethylamine (DPMA) respectively). Exs 1 and 2 are Shelf Stable at 23 °C yet cure rapidly at 95 °C. These results indicate that the conjugated amines block Lewis acids sufficiently to preclude catalyzing reactions with linear epoxides at 23 °C but bind weakly enough to release when heated to catalyze the reaction quickly.

**Table 1**

| Sample | Formulation | Inhibitor | Tpeak (°C) | 23 °C Gel Time | 95 °C Cure Speed |
|---|---|---|---|---|---|
| Comp Ex A | MD_{60.5}D^{EP}_{7.5}M + MD^{H}₆₅M | (none) | NM* | 45 minutes | 30 seconds |
| Comp Ex B | MD_{60.5}D^{EP}_{7.5}M + MD^{H}₆₅M | TEA | 131 | > 5 days | >2 hours |
| Comp Ex C | MD_{60.5}D^{EP}_{7.5}M + MD^{H}₆₅M | TBA | 133 | > 5 days | >2 hours |
| Comp Ex D | MD_{60.5}D^{EP}_{7.5}M + MD^{H}₆₅M | IMD | 180 | > 5 days | >2 hours |
| Comp Ex E | MD_{60.5}D^{EP}_{7.5}M + MD^{H}₆₅M | DBU | 194 | > 5 days | >2 hours |
| Ex 1 | MD_{60.5}D^{EP}_{7.5}M + MD^{H}₆₅M | TPA | 87 | 24 hours | 30 seconds |
| Ex 2 | MD_{60.5}D^{EP}_{7.5}M + MD^{H}₆₅M | DPMA | NM* | 24 hours | 30 seconds |

| | | | | | |
|---|---|---|---|---|---|
| *NM means not measured. | | | | | |

### CYCLIC EPOXIDE COMPOSITIONS

The following Comparative Examples (Comp Exs) and Examples (Exs) illustrate embodiments of the present invention with cyclic epoxides. Data for the samples is in Table 2.

### Comp Ex F: No Inhibitor

Repeat Comp Ex A using MD_{60.5}D^{HEP}_{7.5}M instead of MD_{60.5}D^{EP}_{7.5}M while maintaining the molar ratio of [SiH] to [epoxide group] at 1.5:1. Measure 23 °C Gel Time and 95 °C Cure Speed as per test methods above. The reactive composition is not shelf stable at 23 °C, gelling in 1 minute.

### Comp Ex G: Conjugated Carbon Amine

Repeat Comp Ex F except use a catalyst solution that contains BCF inhibited with triphenylamine (TPA) where the molar ratio of BCF to TPA is 1:1. Use sufficient catalyst solution to provide 500 weight-parts BCF per million weight parts composition in a dental cup and mix using a speedmixer. 23 °C Gel Time is 3 minutes so the reactive composition is not Shelf Stable at 23 °C. So in contrast to linear epoxides, amines having a conjugated carbon bonded to the amine nitrogen insufficiently inhibit Lewis acids from catalyzing reactions between silyl hydrides and cyclic epoxides at 23 °C to achieve shelf stability for the reactive compositions at 23 °C.

### Comp Exs H and I: N=C-N Amine Inhibitors

Repeat Comp Ex F except use a catalyst solution that contains BCF inhibited with IMD or DBU as indicated in Table 2. Use sufficient catalyst solution to provide 500 weight-parts BCF per million weight parts composition in a dental cup and mix using a speedmixer. 23 °C Gel Time is over 5 days for both Comp Exs H and I and the 95 °C cure time is mover 30 minutes. Comp Exs H and I are Shelf Stable at 23 °C but fail to cure within 30 minutes at 95 °C, indicating that that the amine binds too strongly to the Lewis acid and therefor prevents the Lewis acid from catalyzing cure quickly even when heated to 95 °C.

### Exs 3-5: Aliphatic Amine Inhibitor

Prepare compositions for Exs 3-5 in like manner as Comp Ex F, except use a catalyst solution that contains BCF inhibited with aliphatic amines TEA, TBA and trihexyl amine (THA) respectively. Use sufficient catalyst solution to provide 500 weight-parts BCF per million weight parts composition in a dental cup and mix using a speedmixer. 23 °C Gel time and 95 °C Cure Time for the Exs are in Table 2 and reveal the Exs are Shelf Stable (36 hour 23 °C Gel Time) and yet cure rapidly (10 seconds) at 95 °C.

### Exs 6 and 7: Aliphatic Amine Inhibitor

Prepare compositions for Exs 6 and 7 in like manner as Ex 3, except use MD₁₁₇D^{HEP}_{11.8}M instead of MD_{60.5}D^{HEP}_{7.5}M for Ex 6 and M^{HEP}D₄₀M^{HEP} instead of MD_{60.5}D^{HEP}_{7.5}M for Ex 7. Results in Table 2 reveal Exs 6 and 7 are Shelf Stable at 23 °C and yet react quickly (10 seconds) at 95 °C.

**Table 2**

| Sample | Formulation | Inhibitor | Tpeak (°C) | 23 °C Gel Time | 95 °C Cure Speed |
|---|---|---|---|---|---|
| Comp Ex F | MD_{60.5}D^{HEP}_{7.5}M + MD^{H}₆₅M | (none) | NM* | 1 minute | NM* |
| Comp Ex G | MD_{60.5}D^{HEP}_{7.5}M + MD^{H}₆₅M | TPA | NM* | 3 minutes | 10 seconds |
| Comp Ex H | MD_{60.5}D^{HEP}_{7.5}M + MD^{H}₆₅M | IMD | 144 | > 5 days | > 30 minutes |
| Comp Ex I | MD_{60.5}D^{HEP}_{7.5}M + MD^{H}₆₅M | DBU | 194 | > 5 days | > 30 minutes |
| Ex 3 | MD_{60.5}D^{HEP}_{7.5}M + MD^{H}₆₅M | TEA | 73 | 36 hours | 10 seconds |
| Ex 4 | MD_{60.5}D^{HEP}_{7.5}M + MD^{H}₆₅M | TBA | NM* | 36 hours | 10 seconds |
| Ex 5 | MD_{60.5}D^{HEP}_{7.5}M + MD^{H}₆₅M | THA | NM* | 36 hours | 10 seconds |
| Ex 6 | MD₁₁₇D^{HEP}_{11.8}M + MD^{H}₆₅M | TEA | 80 | 5 days | 10 seconds |
| Ex 7 | M^{HEP}D₄₀M^{HEP} + MD^{H}₆₅M | TEA | 82 | > 5 days | 10 seconds |

| | | | | | |
|---|---|---|---|---|---|
| *NM means not measured. | | | | | |

## Claims

1. A composition comprising a mixture of silyl hydride, an epoxide, a Lewis acid catalyst and an amine having the following formula: R¹R²R³N, where the nitrogen is not a member of an N=C-N linkage and where each of R¹, R², and R³ is independently selected from a group consisting of hydrogen, alkyl, substituted alkyl, and conjugated moieties, wherein:
(a) when the epoxide is a linear epoxide, that is, when the epoxide carbons are part of a linear structure, then at least one of R¹, R² and R³ is a conjugated moiety connected to the nitrogen by a conjugated carbon; and
(b) when the epoxide is a cyclic epoxide, that is when the epoxide carbons are part of a cyclic structure, then each of R¹, R², and R³ is connected to the nitrogen by a non-conjugated carbon.

2. The composition of Claim 1, wherein the conjugated carbon is part of an aromatic moiety.

3. The composition of Claim 1, wherein the epoxide carbons are part of a cyclic structure.

4. The composition of any one previous Claim, wherein the epoxide is a polysiloxane with an epoxide functionality on a moiety attached to a silicon atom of the polysiloxane.

5. The composition of any one previous Claim, wherein the Lewis acid catalyst is selected from a group consisting of aluminum alkyls, aluminum aryls, aryl boranes, fluorinated aryl borane, boron halides, aluminum halides, gallium alkyls, gallium aryls, gallium halides, silylium cations and phosphonium cations.

6. The composition of Claim 5, wherein the Lewis acid catalyst is a fluorinated aryl borane.

7. The composition of any one previous Claim, wherein the silyl hydride and the epoxide are the same molecule.

8. The composition of any one previous Claim, wherein the composition is free of a UV light sensitive blocking agent for the Lewis acid catalyst.

9. A process comprising the steps of:
(a) providing a composition of any one previous claim; and
(b) heating the composition to a temperature sufficient to dissociate the Lewis acid catalyst from the amine.

10. The process of Claim 9, wherein step (a) comprises mixing together an amine, Lewis acid catalyst, a silyl hydride and an epoxide provided the Lewis acid catalyst and amine are combined so that the amine can complex with and block the catalytic activity of the Lewis acid prior to combining them with both of silyl hydride and epoxide.

11. The process of Claim 9 or Claim 10, wherein the process further includes a step of applying the composition to a substrate or placing the composition in a mold after step (a) and before or during step (b).

## Patentansprüche

1. Zusammensetzung, umfassend eine Mischung von Silylhydrid, einem Epoxidharz, einem Lewis-Säure-Katalysator und einem Amin, das die folgende Formel aufweist: R¹R²R³N, wobei der Stickstoff kein Mitglied einer N=C-N-Bindung ist und wobei jedes von R¹, R² und R³ aus einer Gruppe unabhängig ausgewählt ist, bestehend aus Wasserstoff, Alkyl, substituiertem Alkyl und konjugierten Resten, wobei:
(a) wenn das Epoxidharz ein lineares Epoxidharz ist, das heißt, wenn die Epoxidharzkohlenstoffe Teil einer linearen Struktur sind, dann ist mindestens eines von R¹, R² und R³ ein konjugierter Teil, der durch einen konjugierten Kohlenstoff mit dem Stickstoff verbunden ist; und
(b) wenn das Epoxidharz ein cyclisches Epoxidharz ist, das heißt, wenn die Epoxidharzkohlenstoffe Teil einer cyclischen Struktur sind, dann ist jedes von R¹, R² und R³ durch einen nicht konjugierten Kohlenstoff mit dem Stickstoff verbunden.

2. Zusammensetzung nach Anspruch 1, wobei der konjugierte Kohlenstoff Teil eines aromatischen Rests ist.

3. Zusammensetzung nach Anspruch 1, wobei die Epoxidharzkohlenstoffe Teil einer cyclischen Struktur sind.

4. Zusammensetzung nach einem der vorstehenden Ansprüche, wobei das Epoxidharz ein Polysiloxan mit einer Epoxidharzfunktionalität auf einem Rest ist, der an ein Siliciumatom des Polysiloxans gelagert ist.

5. Zusammensetzung nach einem der vorstehenden Ansprüche, wobei der Lewis-Säure-Katalysator aus einer Gruppe ausgewählt ist, bestehend aus Aluminiumalkylen, Aluminiumarylen, Arylboranen, fluoriertem Arylboran, Borhalogeniden, Aluminiumhalogeniden, Galliumalkylen, Galliumarylen, Galliumhalogeniden, Silyliumkationen und Phosphoniumkationen.

6. Zusammensetzung nach Anspruch 5, wobei der Lewis-Säure-Katalysator ein fluoriertes Arylboran ist.

7. Zusammensetzung nach einem der vorstehenden Ansprüche, wobei das Silylhydrid und das Epoxidharz dasselbe Molekül sind.

8. Zusammensetzung nach einem der vorstehenden Ansprüche, wobei die Zusammensetzung frei von einem UV-lichtempfindlichen Blockiermittel für den Lewis-Säure-Katalysator ist.

9. Verfahren, umfassend die Schritte:
(a) Bereitstellen einer Zusammensetzung nach einem der vorstehenden Ansprüche; und
(b) Erhitzen der Zusammensetzung auf eine Temperatur, die ausreicht, um den Lewis-Säure-Katalysator aus dem Amin zu dissoziieren.

10. Verfahren nach Anspruch 9, wobei Schritt (a) ein Zusammenmischen eines Amins, eines Lewis-Säure-Katalysators, eines Silylhydrids und eines Epoxidharzes umfasst, vorausgesetzt, der Lewis-Säure-Katalysator und das Amin werden so kombiniert, dass das Amin mit der katalytischen Aktivität der Lewis-Säure komplexieren und diese blockieren kann, vor einem Kombinieren dieser mit sowohl Silylhydrid als auch Epoxidharz.

11. Verfahren nach Anspruch 9 oder 10, wobei das Verfahren ferner einen Schritt des
Aufbringens der Zusammensetzung auf ein Substrat oder des Platzierens der Zusammensetzung in einer Form nach Schritt (a) und vor oder während Schritt (b) beinhaltet.

## Revendications

1. Composition comprenant un mélange d'hydrure de silyle, d'un époxyde, d'un catalyseur acide de Lewis et d'une amine ayant la formule suivante : R¹R²R³N, où l'azote n'est pas un membre d'une liaison N=C-N et où chacun parmi R¹, R² et R³ est indépendamment choisi dans un groupe constitué d'hydrogène, alkyle, alkyle substitué et fragments conjugués, dans laquelle :
(a) lorsque l'époxyde est un époxyde linéaire, c'est-à-dire, lorsque les carbones d'époxyde font partie d'une structure linéaire, alors au moins un parmi R¹, R² et R³ est un fragment conjugué relié à l'azote par un carbone conjugué ; et
(b) lorsque l'époxyde est un époxyde cyclique, c'est-à-dire lorsque les carbones d'époxyde font partie d'une structure cyclique, alors chacun parmi R¹, R² et R³ est relié à l'azote par un carbone non conjugué.

2. Composition selon la revendication 1, dans laquelle le carbone conjugué fait partie d'un fragment aromatique.

3. Composition selon la revendication 1, dans laquelle les carbones d'époxyde font partie d'une structure cyclique.

4. Composition selon l'une quelconque revendication précédente, dans laquelle l'époxyde est un polysiloxane avec une fonctionnalité époxyde sur un fragment fixé à un atome de silicium du polysiloxane.

5. Composition selon l'une quelconque revendication précédente, dans laquelle le catalyseur acide de Lewis est choisi dans un groupe constitué d'alkyles d'aluminium, aryles d'aluminium, aryl-boranes, aryl-borane fluoré, halogénures de bore, halogénures d'aluminium, alkyles de gallium, aryles de gallium, halogénures de gallium, cations silylium et cations phosphonium.

6. Composition selon la revendication 5, dans laquelle le catalyseur acide de Lewis est un aryl-borane fluoré.

7. Composition selon une quelconque revendication précédente, dans laquelle l'hydrure de silyle et l'époxyde sont la même molécule.

8. Composition selon l'une quelconque revendication précédente, dans laquelle la composition est exempte d'un agent bloquant sensible à la lumière UV pour le catalyseur acide de Lewis.

9. Procédé comprenant les étapes consistant à :
(a) fournir une composition selon l'une quelconque revendication précédente ; et
(b) chauffer la composition jusqu'à une température suffisante pour dissocier le catalyseur acide de Lewis par rapport à l'amine.

10. Procédé selon la revendication 9, dans lequel l'étape (a) comprend le mélange conjoint d'une amine, d'un catalyseur acide de Lewis et d'un époxyde à condition que le catalyseur acide de Lewis et l'amine soient combinés de sorte que l'amine peut se complexer avec et bloquer l'activité catalytique de l'acide de Lewis avant de les combiner à la fois avec l'hydrure de silyle et l'époxyde.

11. Procédé selon la revendication 9 ou la revendication 10, le procédé comportant en outre une étape consistant à
appliquer la composition à un substrat ou placer la composition dans un moule après l'étape (a) et avant ou pendant l'étape (b).
